# EUROPÄISCHE PATENTSCHRIFT

(11) **EP 0 709 248 B1**
(45) Veröffentlichungstag und Bekanntmachung des Hinweises auf die Patenterteilung: **30.12.1998**
(21) Anmeldenummer: 95115596.9
(22) Anmeldetag: 04.10.1995
(51) Int. Cl.: B60N 2/36

(54) **Kraftfahrzeugsitz mit einer nach vorn schwenkbaren Rückenlehne**
Automotive vehicle seat with forwardly tilting backrest
Siège de véhicule automobile à dossier rabattable vers l'avant

(30) Priorität: 07.10.1994 DE 4435835
(43) Veröffentlichungstag der Anmeldung: 01.05.1996
(73) Patentinhaber: ADAM OPEL AG, 65423 Rüsselsheim (DE)
(72) Erfinder: Leuchtmann, Andrew, Dipl.-Ing., D-55595 Mandel (DE)
(74) Vertreter: Kümpfel, Heinz, Dipl.-Ing.

(56) Entgegenhaltungen:
- EP-A- 0 336 819
- EP-A- 0 564 962
- DE-A- 3 211 363
- FR-A- 2 711 952
- US-A- 4 305 615

## Beschreibung

Die Erfindung betrifft einen Kraftfahrzeugsitz mit einer nach vorn schwenkbaren Rückenlehne, insbesondere Hintersitzbank mit geteilter Rückenlehne, bei der nahe des oberen Endes der Rückenlehne eine Verriegelungsvorrichtung mit einem im Verriegelungszustand die Rückenlehne mit einem angrenzenden Bauteil verbindenden Riegel angeordnet ist.

Ein solcher Kraftfahrzeugsitz ist Gegenstand der nachveröffentlichten EP-A-0 697 307(A2), die eine Vorrichtung zum Verriegeln von geteilt klappbaren und mittels zugeordneter Arretierungen am Fahrzeugaufbau in Normalposition gehaltener Rückenlehnen an Kraftfahrzeugsitzen betrifft. Um im Falle eines Aufpralls oder starken Bremsvorgangs einen verbesserten Schutz für die Insassen vor hinter den Rücksitzen untergebrachten Gegenständen zu erreichen, ist bei dieser Lösung mindestens eine durch einen Beschleunigungssensor auslösbare und an beiden Rückenlehnenteilen wirksame Zusatzarretierung vorgesehen.

Nach einer ersten Ausführungsform ist zur Auslösung der Zusatzarretierung am Rückenlehnenteil als Kraftspeicher ein Gasgenerator mit einem Beschleunigungssensor angeordnet, welcher den Gasgenerator bei Überschreiten eines in Fahrtrichtung ermittelten Beschleunigungsgrenzwertes auslöst. Zum Übertragen der verhältnismäßig hohen Verriegelungskraft vom Kraftspeicher zu einem Riegelbolzen der Zusatzarretierung, um den Riegelbolzen aus der Entriegelungsstellung in die Verriegelungsstellung zu bewegen, ist bei dieser Ausführung eine Zugeinrichtung bzw. Druckleitung vorgesehen, die zwischen der Zusatzarretierung und dem räumlich von der Zusatzarretierung entfernten Kraftspeicher angeordnet ist.

Nach einer zweiten Ausführungsform der in der EP-A-0 697 307 (A2) beschriebenen Lösung ist der Kraftspeicher als ein an der Zusatzarretierung angeordneter und unmittelbar auf den Riegelbolzen der Zusatzarretierung einwirkender Federspeicher ausgebildet. Der Beschleunigungssensor ist in diesem Beispiel in räumlicher Nähe zum Riegelbolzen angeordnet, so daß der Federspeicher, der Riegelbolzen und der Beschleunigungssensor als Bestandteile der Zusatzarretierung im oberen Bereich der Rückenlehne angeordnet sind.

Eine weitere Verriegelungsvorrichtung für einen Kraftfahrzeugsitz ist aus der DE-C-32 11 363 bekannt. Bei dem in dieser Schrift beschriebenen Kraftfahrzeugsitz handelt es sich um eine Hintersitzbank mit zwei Rückenlehnen, welche einzeln oder gemeinsam nach vorn geklappt werden können, um den Laderaum des Kraftfahrzeugs zu vergrößern. Bei solchen Rückenlehnen ist es wünschenswert, daß diese bei einem Aufprallunfall den Kräften standhalten können, welche dann durch Gepäckstücke im Kofferraum auf sie ausgeübt werden. Zu diesem Zweck greifen die Rückenlehnen fahrzeugaußenseitig jeweils mit einem Verriegelungsschloß über einen an der jeweiligen Fahrzeugseitenwand angeordneten Bundbolzen. Zusätzlich wird der Teilungsspalt zwischen den beiden Rückenlehnen durch den Riegel der Verriegelungsvorrichtung überbrückt, der hierzu in eine Rastausnehmung der angrenzenden Rückenlehne eingreift. Jeder Sitz hat eine Auslösetaste, durch welche zugleich der den Teilungsspalt überbrückende Riegel und das seitliche Verriegelungsschloß entriegelbar ist.

Nachteilig bei der bekannten Verriegelungsvorrichtung ist es, daß zum gegenseitigen Verbinden der beiden Rückenlehnen aus beiden Rückenlehnen seitlich zur Mitte hin Bauteile aus den Rückenlehnen ragen müssen, nämlich einerseits ein Verriegelungsbolzen, andererseits eine Verriegelungsöse. Diese vorspringenden Bauteile führen zu einem Verletzungsrisiko, wenn eine Rückenlehne heruntergeschwenkt ist. Kostenmäßig ist es von Nachteil, daß zur gleichzeitigen Betätigung der Verriegelungsvorrichtung und des jeweiligen, seitlichen Verriegelungsschlosses ein aufwendiges Gestänge und Hebelübertragungen in der Rükkenlehne notwendig werden. Weiterhin verbleibt durch die Verriegelungsvorrichtung zwangsläufig zwischen den Rükkenlehnen ein unerwünscht breiter Teilungsspalt.

Das Problem, daß Rückenlehnen bei einem Frontalaufprall möglicherweise den Kräften nicht standhalten können, welche durch auf sie aufprallende Gepäckstücke ausgeübt werden, ist nicht nur auf die Rückenlehnen der Rücksitze beschränkt. Wenn man in einem Caravan die Rückenlehnen der Rücksitze zur Vergrößerung des Laderaumes herunterklappt, dann begrenzen die Rückenlehnen der Vordersitze den Laderaum, so daß auch diese durch Gepäckstücke belastet werden können.

Der Erfindung liegt das Problem zugrunde, einen Kraftfahrzeugsitz der eingangs genannten Art so zu gestalten, daß im Falle eines Unfalls seine Rückenlehne möglichst wirksam und mit möglichst geringem technischen Aufwand gegen ein Verschwenken nach vorn gesichert ist, ohne daß es beim beabsichtigten Verschwenken für den Benutzer zusätzlicher Handgriffe bedarf.

Dieses Problem wird erfindungsgemäß durch die Merkmale des Patentanspruches 1 gelöst. Ein weiterer Aspekt derselben Erfindung ergibt sich durch die Merkmale des Anspruchs 13.

Eine solche Verriegelungsvorrichtung kann sich beim normalen Fahrbetrieb stets in Entriegelungsstellung befinden. Deshalb kann der Riegel dann vollständig in die Rückenlehne eingezogen sein. Erst wenn es zu einem Unfall mit hohen Verzögerungswerten kommt, wird der Stellmotor der Verriegelungsvorrichtung aktiviert und bewegt dann den Riegel in Verriegelungsstellung. Da die erfindungsgemäße Verriegelungsvorrichtung von den bei Rückenlehnen einer Rücksitzbank vorgesehenen seitlichen Verriegelungsschlössern unabhängig sind, ist in der Rückenlehne kein Koppelmechanismus zwischen dem jeweiligen Verriegelungsschloß und der Verriegelungsvorrichtung erforderlich. Hinzu kommt, daß die erfindungsgemäße Verriegelungsvorrichtung sehr einfach aufgebaut sein kann, einen geringen Bauraumbedarf hat und wartungsfrei ist. Da sie nicht mit dem Mechanismus zum seitlichen Verriegeln der Rückenlehnen gekoppelt werden muß, kann die erfindungsgemäße Verriegelungsvorrichtung auch sehr leicht nachträglich eingebaut werden.

Primär ist bei der erfindungsgemäßen Verriegelungsvorrichtung daran gedacht, zwei angrenzende Rückenlehnen einer Rücksitzbank miteinander zu verriegeln. Die erfindungsgemäße, verzögerungsabhängig arbeitende Verriegelungsvorrichtung könnte jedoch auch dazu dienen, die Rükkenlehnen zweier Vordersitze miteinander zu verriegeln oder sogar - für den Fall eines Unfalls - die Rückenlehnen von Einzelsitzen nahe ihres oberen Endes zusätzlich mit einer Fahrzeugseitenwand zu verbinden. Weil der Riegel mit einem Stellmotor verschoben wird, kann man ohne bauliche Probleme einen großen Sperrhub vorsehen, was für die Festigkeit der Verriegelung vorteilhaft ist.

Besonders stark kommen die Vorteile der Erfindung zur Geltung, wenn das an die Rückenlehne mit der Verriegelungsvorrichtung angrenzende Bauteil eine weitere Rückenlehne ist und diese eine Rastausnehmung zum Einschieben des Riegels aufweist.

Der Stellmotor muß im Falle eines Unfalls den Riegel sehr rasch in Verriegelungsstellung bewegen, damit die Verriegelung erfolgt, bevor sich die Rückenlehne aufgrund der auftretenden Fahrzeugverzögerung nach vorn bewegen kann. Das läßt sich gemäß einer vorteilhaften Weiterbildung der Erfindung mit geringem Aufwand erreichen, wenn der Stellmotor ein in Entriegelungsstellung durch ein Gesperre in Spannstellung gehaltener und durch den Verzögerungssensor auslösbarer Federspeicher ist.

Der Verzögerungssensor kann sehr unterschiedlich ausgebildet sein. Er erfordert keinerlei elektrische oder elektronische Bauteile und ist äußerst einfach ausgebildet, wenn er eine sich bei hoher Fahrzeugverzögerung in eine den Stellmotor aktivierende Auslösestellung verschiebende Sensormasse hat.

Ein Ausfahren des Riegels im Falle eines Unfalls aus einer Rückenlehne frei in den Raum, wenn die angrenzende Rückenlehne nach vorn geklappt ist, läßt sich auf einfache Weise dadurch ausschließen, daß die Verriegelungseinrichtung einen zu der angrenzenden Rückenlehne hin gerichteten Abfragekopf hat und wenn dieser Abfragekopf mit Mitteln zum Blockieren des Gesperres des Stellmotors in Verbindung steht.

Konstruktiv besonders einfach ist die Verriegelungsvorrichtung gestaltet, wenn gemäß einer anderen Weiterbildung der Erfindung der Riegel ein durch eine Druckfeder in Verriegelungsstellung vorgespannter Bolzen ist, welcher eine Ausnehmung aufweist, in die die Sensormasse greift.

Die Sensormasse kann zugleich dasjenige Bauteil bilden, welches den Federspeicher in Spannstellung hält, solange keine unzulässig hohe Verzögerung auftritt, wenn die Sensormasse mit einem Maul über die Ausnehmung greift und wenn zwischen dem Maul und der Ausnehmung ein Federklips angeordnet ist.

Auch der Abfragekopf und die mit ihm in Verbindung stehenden Bauteile können ausschließlich mechanisch sein, so daß die Verriegelungsvorrichtung keine elektrischen Anschlüsse benötigt, wenn der Abfragekopf durch eine Feder zur angrenzenden Sitzlehne hin vorgespannt und mit einer im ausgefahrenen, das Nichtvorhandensein einer angrenzenden Rückenlehne signalisierenden Zustand die Sensormasse auf der Ausnehmung blockierenden Sperre versehen ist.

Zur weiteren Vereinfachung des Aufbaus der Vorrichtung trägt es bei, wenn der Abfragekopf einen axial verschiebbaren Stift hat, welcher mit einem über den Bolzen des Riegels greifenden Sperrbügel verbunden ist, und wenn der Sperrbügel zwei Sperrstifte hat, welche in Sperrstellung in Bohrungen eingreifen, die durch die Sensormasse hindurch in ein Gehäuse der Verriegelungsvorrichtung führen.

Der Stellmotor ist besonders kompakt ausgebildet und verschiebt im Bedarfsfall den Riegel sehr schnell in Sperrstellung, wenn gemäß einer anderen vorteilhaften Weiterbildung der Erfindung der Stellmotor ein pyrotechnischer Treibsatz ist.

In heutigen Kraftfahrzeugen ist häufig zum Auslösen der Airbags oder anderer Sicherheitseinrichtungen, beispielsweise einem nur im Bedarfsfall ausfahrbaren Überrollbügel, ein Steuergerät mit einem Verzögerungssensor vorhanden. Dieser Verzögerungssensor kann für die erfindungsgemäße Verriegelungsvorrichtung mitbenutzt werden, indem der Verzögerungssensor der Verriegelungsvorrichtung ein im Kraftfahrzeug zum Auslösen von Sicherungseinrichtungen, insbesondere den Airbags, ohnehin vorhandenes Bauteil ist.

Da Rückenlehnen von Sitzen nicht starr mit der Fahrzeugstruktur verbunden sind und vor allem im oberen Bereich elastisch verformbar sind, gelangen die bei einem Unfall auftretenden Verzogerungswerte nur abgeschwächt zu einem im Bereich der Verriegelungsvorrichtung angeordneten Verzögerungssensor. Die durch Elastizitäten in der Rückenlehne und ihre Verbindung mit der Fahrzeugstruktur auftretende Dämpfung der Verzögerung ist zudem infolge von Toleranzen bei unterschiedlichen Fahrzeugen recht unterschiedlich, so daß sich für den Verzögerungssensor keine hohe Ansprechgenauigkeit ergibt. Die Ansprechgenauigkeit läßt sich jedoch mit einfachen Mitteln erhöhen, wenn die Sensormasse räumlich entfernt von der Verriegelungsvorrichtung angeordnet und mit dem Riegel oder dem Gesperre des Riegels durch einen Seilzug verbunden ist. Man kann dann für die Sensormasse eine Stelle wählen, welche möglichst ungedämpft den Fahrzeugverzögerungen ausgesetzt ist.

Insbesondere für eine von der Verriegelungsvorrichtung entfernt angeordnete Sensormasse ist es konstruktiv vorteilhaft, wenn die Sensormasse als um eine horizontale Achse verschwenkbares Pendel ausgebildet ist und einen in Entriegelungsstellung des Riegels über einen Kopf des ihr zugewandten Endes des Seilzuges greifenden Haken hat.

Ein Blockieren der als Pendel ausgebildeten Sensormasse bei nicht hochgeklappter, angrenzender Rückenlehne ist wiederum leicht möglich, indem der Abfragekopf mit einem in Sperrstellung eine Pendelbewegung der Sensormasse ausschließenden Rasthebel gekoppelt ist.

Die zu einer Auslösung der Verriegelungsvorrichtung führenden Verzogerungswerte lassen sich leicht einstellen, so daß eine Anpassung an unterschiedliche Fahrzeugtypen oder ein Toleranzausgleich möglich wird, wenn die Sensormasse bei Verzögerung gegen die Kraft einer Einstellfeder verschiebbar angeordnet ist.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine perspektivische Ansicht eines rückwärtigen Bereiches eines Innenraums eines Kraftfahrzeugs mit einem erfindungsgemäßen Kraftfahrzeugsitz,
- Fig. 2: einen Längsschnitt durch eine Verriegelungsvorrichtung des Kraftfahrzeugsitzes in Entriegelungsstellung,
- Fig. 3: die Verriegelungsvorrichtung nach Fig. 2 in Verriegelungsstellung,
- Fig. 4: eine perspektivische Explosionsdarstellung wesentlicher Teile der Verriegelungsvorrichtung nach den Figuren 2 und 3,
- Fig. 5: einen Blick von vorn auf einen noch nicht mit Polsterauflagen versehenen, erfindungsgemäß gestalteten Rücksitzbereich eines Kraftfahrzeugs,
- Fig. 6: einen Riegel mit Stellmotor der Ausführungsform eines Kraftfahrzeugsitzes nach Fig. 5,
- Fig. 7: eine perspektivische Ansicht einer weiteren Ausführungsform eines Riegels mit Stellmotor einer Verriegelungsvorrichtung nach der Erfindung,
- Fig. 8: eine perspektivische Darstellung der Sensormasse mit angrenzenden Bauteilen der Verriegelungsvorrichtung nach Fig. 7.

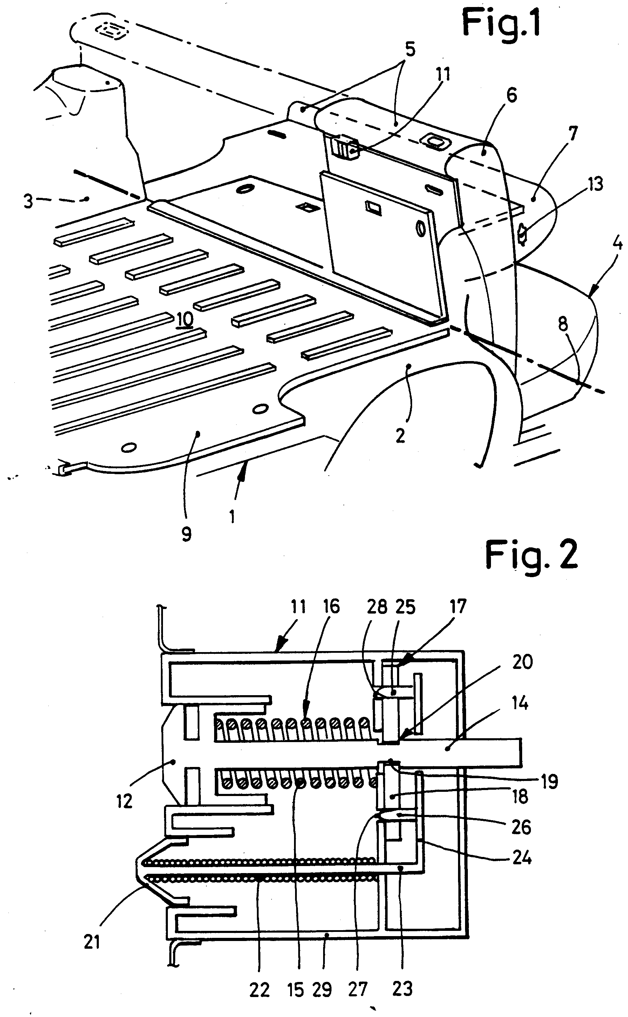

Die Figur 1 zeigt einen Teilbereich einer Fahrzeugstruktur 1 mit Radhäusern 2, 3. Vor diesen Radhäusern 2, 3 ist ein als Sitzbank ausgebildeter Rücksitz 4 angeordnet, der einen geteilten Sitzhinterrücken 5 hat. Dieser ist auf nicht gezeigte Weise an beiden Außenseiten durch ausrastbare Sitzschlösser mit den Seitenwänden der Fahrzeugstruktur 1 verbunden. Der Sitzhinterrücken 5 bildet zwei Rückenlehnen 6, 7, welche aus ihrer nach oben gerichteten, zum Sitzen erforderlichen Stellung einzeln oder gemeinsam um eine quer zum Fahrzeug verlaufende Schwenkachse 8 nach vorn bis in eine horizontale Position verschwenkt werden können. In der Figur 1 sind die Rückenlehne 6 in aufrechter Stellung und die Rückenlehne 7 in nach vorn geklappter Stellung gezeigt.

Hinter dem Sitzhinterrücken 5 erkennt man in Figur 1 ein Bodenblech 9 eines Kofferraums 10 des Kraftfahrzeugs. Bei hochgeklapptem Sitzhinterrücken 5 prallen im Falle eines Frontalaufpralls des Kraftfahrzeugs dort untergebrachte Gepäckstücke mit großer Wucht gegen den Sitzhinterrücken 5. Durch die Teilung des Sitzhinterrückens 5 könnte es dabei geschehen, daß die üblicherweise nur außenseitig mit der Fahrzeugstruktur 1 verbundenen Rückenlehnen 6, 7 im Bereich der Teilung nach vorn nachgeben, so daß der Teilungsspalt größer wird und durch ihn Gepäckstücke aus dem Kofferraum 10 in den Fahrgastraum gelangen. Um das zu vermeiden, ist gemäß der Erfindung an der Rückseite der Rückenlehne 6 im oberen Bereich eine Verriegelungsvorrichtung 11 vorgesehen, welche ausschließlich im Falle eines Frontalaufpralls die Rückenlehnen 6, 7 durch einen in Figur 2 zu sehenden Riegel 12 miteinander dadurch verbindet, daß der Riegel 12 der Rückenlehne 6 in eine Rastausnehmung 13 der Rückenlehne 7 greift. Da die Verriegelungsvorrichtung 11 nur bei einem Unfall in Verriegelungsstellung gelangt, können die Rückenlehnen 6, 7 im normalen Gebrauch ohne zusätzliche Handgriffe auf übliche Weise verschwenkt werden.

Die Figur 2 zeigt die Verriegelungsvorrichtung 11 im Schnitt und gegenüber Figur 1 stark vergrößert. Der Riegel 12 hat nach hinten hin einen Bolzen 14, der von einer ihn in Verriegelungsstellung vorspannenden Druckfeder 15 umgeben ist. Diese Druckfeder 15 bildet zusammen mit dem Bolzen 14 einen als Federspeicher ausgebildeten Stellmotor 16.

In Figur 2 gesehen rechts vom Stellmotor 16 ist ein Verzögerungssensor 17 angeordnet, welcher eine Sensormasse 18 hat. Diese greift über eine Ausnehmung 19 des Bolzens 14 und bildet auf diese Weise ein Gesperre 20 für den Stellmotor 16.

Ein weiteres, in der Figur 2 erkennbares Merkmal der Verriegelungsvorrichtung 11 ist ein axial verschiebbarer Abfragekopf 21, der ebenfalls durch eine Feder 22 in eine vorspringende Position vorgespannt ist. Der Abfragekopf 21 hat einen von der Feder 22 umgebenden und axial verschiebbaren Stift 23, welcher mit einem über den Bolzen 14 des Riegels 12 greifenden Sperrbügel 24 verbunden ist. Dieser Sperrbügel 24 ist mit zwei Sperrstiften 25, 26 versehen, welche in der in Figur 2 gezeigten Sperrstellung in Bohrungen 27, 28 greifen, die durch die Sensormasse 18 hindurch bis in ein Gehäuse 29 der Verriegelungsvorrichtung 11 führen.

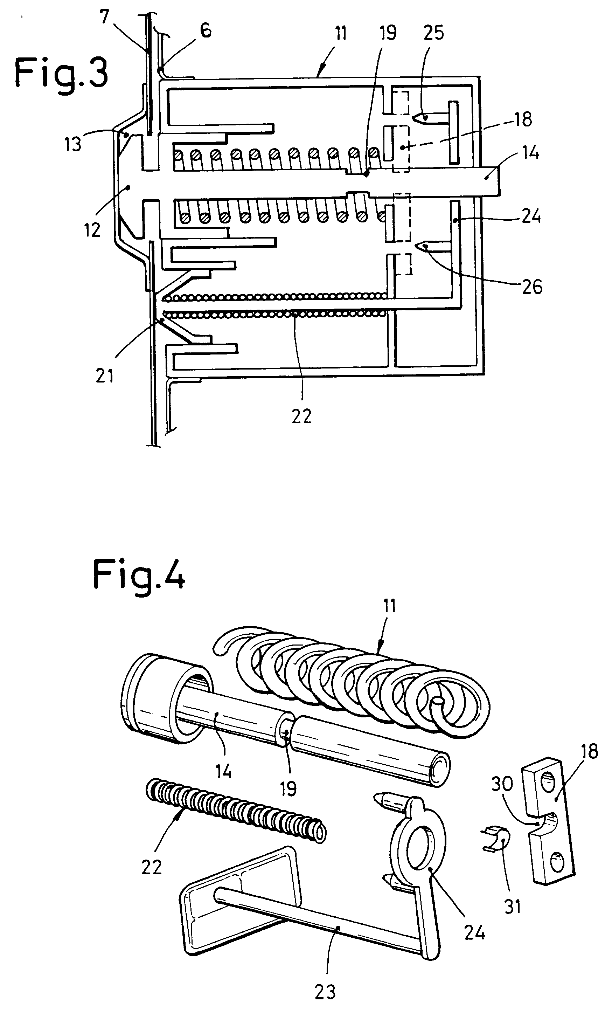

In Figur 3 ist die Verriegelungsvorrichtung 11 in Verriegelungsstellung dargestellt. Dabei ragt der Riegel 12 seitlich aus der Rückenlehne 6 heraus und greift in die Rastausnehmung 13 der Rückenlehne 7. Diese Rastausnehmung 13 verjüngt sich entgegen der Fahrtrichtung. Da im Gegensatz zur Figur 1 gemäß Figur 3 beide Rückenlehnen 6, 7 hochgeklappt sind, konnte die Rückenlehne 7 den Abfragekopf 21 in die Rückenlehne 6 hinein verschieben, so daß sich auch der Sperrbügel 24 mit den Sperrstiften 25, 26 entsprechend verschoben hatte. Dadurch wurde die Sensormasse 18 entriegelt, so daß sie sich beim Unfall aus der Ausnehmung 19 herausbewegen konnte und dadurch den Bolzen 14 freigab.

Die Explosionsdarstellung gemäß Figur 4 dient der zusätzlichen Verdeutlichung der Gestaltung der Verriegelungsvorrichtung. Zu erkennen ist, daß die Sensormasse 18 ein nach vorn hin offenes Maul 30 hat, mit dem sie unter Zwischenschaltung eines Federklips 31 über die Ausnehmung 19 zu greifen und dadurch den Bolzen 14 zu arretieren vermag. Ebenfalls dargestellt ist in Figur 4 der Stift 23 mit dem Sperrbügel 24.

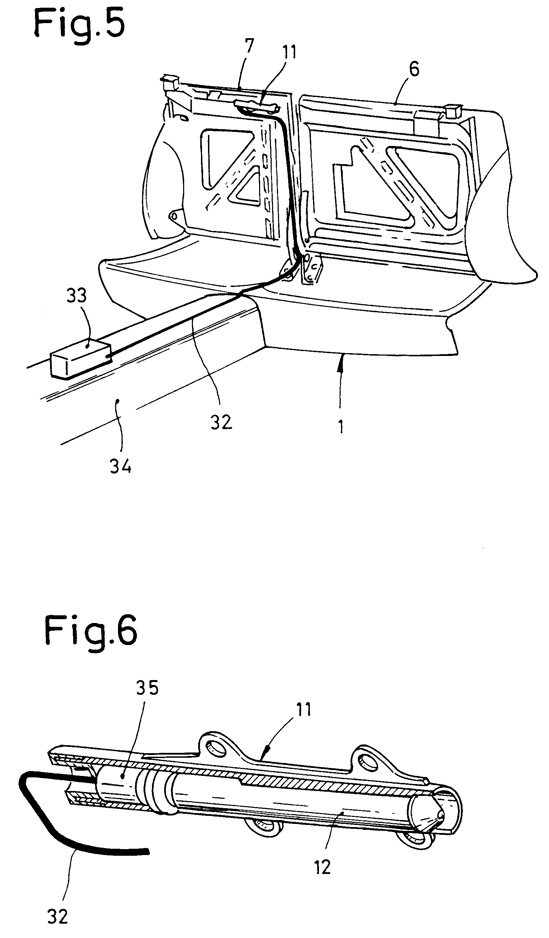

Bei der Ausführungsform nach Figur 5 ist die Verriegelungsvorrichtung 11 über eine elektrische Leitung 32 mit einem Verzögerungssensor 33 verbunden, der auf einem Mitteltunnel 34 der Fahrzeugstruktur 1 angeordnet ist und zugleich zum Auslösen anderer Sicherheitseinrichtungen, insbesondere der Airbags, dient.

In Figur 6 ist gezeigt, daß der Riegel 12 bei dieser Ausführungsform statt von einem Federspeicher als Stellmotor von einem pyrotechnischen Treibsatz 35 angetrieben ist. Durch einen Befehl des Verzögerungssensors 33 wird dieser Treibsatz 35 elektrisch gezündet und der Riegel 12 dadurch in Verriegelungsstellung bewegt.

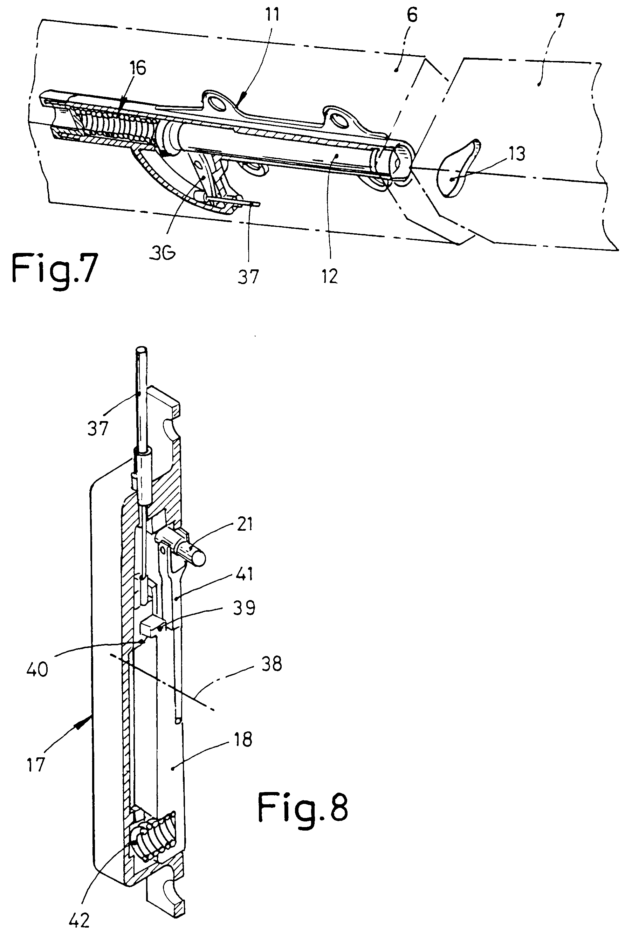

Die Ausführungsformen nach den Figuren 7 und 8 unterscheiden sich von der nach den Figuren 1 bis 4 insbesondere dadurch, daß der mechanisch arbeitende, in Figur 8 dargestellte Verzögerungssensor 17 räumlich getrennt von der in Figur 7 gezeigten Verriegelungsvorrichtung 11 angeordnet ist.

Die Figur 7 läßt erkennen, daß auch bei dieser Ausführungsform der Riegel 12 von einem als Federspeicher ausgebildeten Stellmotor 16 in Verriegelungsstellung vorgespannt wird. Der Riegel 12 wird mittels eines Hebels 36 und eines daran angelenkten Seilzugs 37 in Spannstellung gehalten, so daß er nicht in die Rastausnehmung 13 der Rückenlehne 7 ragt und diese dadurch mit der Rückenlehne 6 verbindet.

Wie die Figur 8 zeigt, ist die Sensormasse 18 als um eine horizontale Achse 38 schwenkbares Pendel ausgebildet, welches mit einem Haken 39 an seinem oberen Ende über einen Kopf 40 am unteren Ende des Seilzugs 37 greift und dadurch den Seilzug 37 arretiert. Schwenkt die Sensormasse 18 im Uhrzeigersinn, dann gibt der Haken 39 den Kopf 40 frei. Dadurch kann der Seilzug 37 sich verschieben, was es dem als Federspeicher ausgebildeten Stellmotor 16 ermöglicht, den Riegel 12 in Verriegelungsstellung zu bewegen.

Zum Einstellen der zu einem Auslösen des Federspeichers 16 führenden Pendelbewegung der Sensormasse 18 dient eine Einstellfeder 42, welche sich gegen einen unteren Bereich der Sensormasse 18 abstützt.

In Figur 8 ist auch zu erkennen, daß genau wie bei den Ausführungsformen nach den Figuren 1 bis 4 ein Anfragekopf 21 vorgesehen ist, der im vorspringenden Zustand mittels eines Rasthebels 41 die Sensormasse 18 blockiert.

## Patentansprüche

1. Kraftfahrzeugsitz mit einer nach vorn schwenkbaren Rückenlehne, insbesondere Hintersitzbank mit geteilter Rückenlehne, bei der nahe des oberen Endes der Rückenlehne eine Verriegelungsvorrichtung mit einem im Verriegelungszustand die Rückenlehne mit einem angrenzenden Bauteil verbindenden Riegel angeordnet ist, wobei zum Verschieben des Riegels (12) aus seiner Entriegelungsstellung in die Verriegelungsstellung ein Stellmotor (16) angeordnet ist und zum Aktivieren des Stellmotors (16) ein bei hoher Fahrzeugverzögerung ansprechender Verzögerungssensor (17) vorgesehen ist, der am Bodenblech (9) nahe der Schwenkachse (8) der Rückenlehne (6, 7) bzw. der Fahrzeugstruktur (1) am Bodenblech (9) angeordnet ist.

2. Kraftfahrzeugsitz nach Anspruch 1, **dadurch gekennzeichnet**, daß das an die Rückenlehne (6) mit der Verriegelungsvorrichtung (11) angrenzende Bauteil eine weitere Rückenlehne (7) ist und diese eine Rastausnehmung (13) zum Einschieben des Riegels (12) aufweist.

3. Kraftfahrzeugsitz nach den Ansprüchen 1 oder 2, **dadurch gekennzeichnet**, daß der Stellmotor (16) ein in Entriegelungsstellung durch ein Gesperre (20) in Spannstellung gehaltener und durch den Verzögerungssensor (17) auslösbarer Federspeicher ist.

4. Kraftfahrzeugsitz nach zumindest einem der vorangehenden Ansprüche, **dadurch gekennzeichnet**, daß der Verzögerungssensor (17) eine sich bei hoher Fahrzeugverzögerung in eine den Stellmotor (16) aktivierende Auslösestellung verschiebende Sensormasse (18) hat.

5. Kraftfahrzeugsitz nach zumindest einem der vorangehenden Ansprüche, **dadurch gekennzeichnet**, daß die Verriegelungseinrichtung (11) einen zu der angrenzenden Rückenlehne (7) hin gerichteten Abfragekopf (21) hat und daß dieser Abfragekopf (21) mit Mitteln zum Blockieren des Gesperres (20) des Stellmotors (16) in Verbindung steht.

6. Kraftfahrzeugsitz nach zumindest einem der vorangehenden Ansprüche, **dadurch gekennzeichnet**, daß der Riegel (12) als ein durch eine Druckfeder (15) in Verriegelungsstellung vorgespannter Bolzen (14) ausgebildet ist.

7. Kraftfahrzeugsitz nach zumindest einem der vorangehenden Ansprüche, **dadurch gekennzeichnet**, daß die Sensormasse (18) räumlich entfernt von der Verriegelungsvorrichtung (11) angeordnet und mit dem Riegel (12) oder dem Gesperre (20) des Riegels (12) durch einen Seilzug (37) verbunden ist.

8. Kraftfahrzeugsitz nach zumindest einem der vorangehenden Ansprüche, **dadurch gekennzeichnet**, daß die Sensormasse (18) als um eine horizontale Achse (38) verschwenkbares Pendel ausgebildet ist und einen in Entriegelungsstellung des Riegels (12) über einen Kopf (40) des ihr zugewandten Endes des Seilzuges (37) greifenden Haken (39) hat.

9. Kraftfahrzeugsitz nach Anspruch 8, **dadurch gekennzeichnet**, daß der Abfragekopf (21) mit einem in Sperrstellung eine Pendelbewegung der Sensormasse (18) ausschließenden Rasthebel (41) gekoppelt ist.

10. Kraftfahrzeugsitz nach zumindest einem der vorangehenden Ansprüche, **dadurch gekennzeichnet**, daß die Sensormasse (18) bei Verzögerung gegen die Kraft einer Einstellfeder (42) verschiebbar angeordnet ist.

11. Kraftfahrzeugsitz nach einem der Ansprüche 1 bis 3, **dadurch gekennzeichnet**, daß der Verzögerungssensor (33) ein im Kraftfahrzeug zum Auslösen von Sicherungseinrichtungen, insbesondere den Airbags, ohnehin vorhandenes Bauteil ist.

12. Kraftfahrzeugsitz nach den Ansprüchen 1 oder 2, **dadurch gekennzeichnet**, daß der Stellmotor ein pyrotechnischer Treibsatz (35) ist.

13. Kraftfahrzeugsitz mit einer nach vorn schwenkbaren Rückenlehne (6, 7), insbesondere Hintersitzbank mit geteilter Rückenlehne (6, 7), bei der nahe des oberen Endes der Rückenlehne (6) eine Verriegelungsvorrichtung (11) mit einem im Verriegelungszustand die Rückenlehne (6) mit einem angrenzenden Bauteil verbindenden Riegel (12) angeordnet ist, wobei zum Verschieben des Riegels (12) aus seiner Entriegelungsstellung in die Verriegelungsstellung ein Stellmotor (16) angeordnet ist und zum Aktivieren des Stellmotors (16) ein bei hoher Fahrzeugverzögerung ansprechender Verzögerungssensor (11) vorgesehen ist, der eine Sensormasse (18) hat wobei die Verriegelungseinrichtung (11) einen zu der angrenzenden Rückenlehne (7) hin gerichteten Abfragekopf (21) hat und daß dieser Abfragekopf (21) mit Mitteln zum Blockieren der Sensormasse (18) in Verbindung steht.

14. Kraftfahrzeugsitz nach Anspruch 13, **dadurch gekennzeichnet**, daß der Abfragekopf (21) durch eine Feder (22) zur angrenzenden Rückenlehne (7) hin vorgespannt und mit einer im ausgefahrenen, das Nichtvorhandensein einer angrenzenden Rückenlehne (7) signalisierenden Zustand die Sensormasse (18) auf einer Ausnehmung (19) des Bolzens (14) blockierenden Sperre (25, 26, 27, 28) versehen ist.

15. Kraftfahrzeugsitz nach Anspruch 13 oder 14, **dadurch gekennzeichnet**, daß die Sensormasse (18) mit einem Maul (30) über die Ausnehmung (19) greift und daß zwischen dem Maul (30) und der Ausnehmung (19) ein Federklips (31) angeordnet ist.

16. Kraftfahrzeugsitz nach Anspruch 13 oder zumindest einem der nachfolgenden Ansprüche, **dadurch gekennzeichnet**, daß der Abfragekopf (21) einen axial verschiebbaren Stift (23) hat, welcher mit einem über den Bolzen (14) des Riegels (12) greifenden Sperrbügel (24) verbunden ist und daß der Sperrbügel (24) zwei Sperrstifte (25, 26) hat, welche in Sperrstellung in Bohrungen (27, 28) eingreifen, die durch die Sensormasse (18) hindurch in ein Gehäuse (29) der Verriegelungsvorrichtung (11) führen.

## Claims

1. Motor vehicle seat with a forwardly pivotable backrest, in particular rear bench seat with divided backrest, in which near the upper end of the backrest is arranged a locking device with a catch connecting the backrest to an adjoining structural member in the locked state, wherein for sliding the catch (12) out of its release position into the locking position a servomotor (16) is provided and for activation of the servomotor (16) a deceleration sensor (17) which responds in case of high vehicle deceleration is provided, which is arranged on the floor panel (9) near the pivot axis (8) of the backrest (6, 7) or the vehicle structure (1) on the floor panel (9).

2. Motor vehicle seat according to claim 1, characterised in that the structural member adjoining the backrest (6) with the locking device (11) is an additional backrest (7) and the latter comprises a latch recess (13) for insertion of the catch (12).

3. Motor vehicle seat according to claim 1 or 2, characterised in that the servomotor (16) is a spring storage device which in the release position is held by a locking mechanism (20) in the clamping position and can be released by the deceleration sensor (17).

4. Motor vehicle seat according to one or more of the preceding claims, characterised in that the deceleration sensor (17) has a sensor mass (18) which in case of high vehicle deceleration is shifted to a release position activating the servomotor (16).

5. Motor vehicle seat according to one or more of the preceding claims, characterised in that the locking device (11) has a scan head (21) directed towards the adjoining backrest (7) and in that this scan head (21) is connected to means for blocking the locking mechanism (20) of the servomotor (16).

6. Motor vehicle seat according to one or more of the preceding claims, characterised in that the catch (12) is constructed as a bolt (14) biased by a compression spring (15) into the locking position.

7. Motor vehicle seat according to one or more of the preceding claims, characterised in that the sensor mass (18) is arranged spatially remote from the locking device (11) and connected to the catch (12) or locking mechanism (20) of the catch (12) by a control cable (37).

8. Motor vehicle seat according to one or more of the preceding claims, characterised in that the sensor mass (18) is constructed as a pendulum pivotable about a horizontal axis (38) and has a hook (39) which in the release position of the catch (12) engages over a head (40) of the end of the control cable (37) facing towards it.

9. Motor vehicle seat according to claim 8, characterised in that the scan head (21) is coupled to a latch lever (41) which in the blocking position prevents a pendulum movement of the sensor mass (18).

10. Motor vehicle seat according to one or more of the preceding claims, characterised in that the sensor mass (18) is arranged so as to be slidable against the force of an adjusting spring (42) in case of deceleration.

11. Motor vehicle seat according to any of claims 1 to 3, characterised in that the deceleration sensor (33) is a component which exists in the motor vehicle anyway for triggering safety devices, in particular the airbags.

12. Motor vehicle seat according to claim 1 or 2, characterised in that the servomotor is a pyrotechnic propellant (35).

13. Motor vehicle seat with forwardly pivotable backrest (6, 7), in particular rear bench seat with divided backrest (6, 7), in which near the upper end of the backrest (6) is arranged a locking device (11) with a catch (12) connecting the backrest (6) to an adjoining structural member in the locked state, wherein for sliding the catch (12) out of its release position into the locking position a servomotor (16) is provided and for activation of the servomotor (16) a deceleration sensor (17) which responds in case of high vehicle deceleration and which has a sensor mass (18) is provided, wherein the locking device (11) has a scan head (21) which is directed towards the adjoining backrest (7) and in that this scan head (21) is connected to means for blocking the sensor mass (18).

14. Motor vehicle seat according to claim 3, characterised in that the scan head (21) is biased by a spring (22) towards the adjoining backrest (7) and provided with a barrier (25, 26, 27, 28) which in the extended state which signals the absence of an adjoining backrest (7) blocks the sensor mass (18) on a recess (19) of the bolt (14).

15. Motor vehicle seat according to claim 13 or 14, characterised in that the sensor mass (18) engages by an opening (30) over the recess (19) and in that between the opening (30) and the recess (19) is arranged a spring clip (31).

16. Motor vehicle seat according to claim 13 or at least one of the following claims, characterised in that the scan head (21) has an axially slidable pin (23) which is connected to a locking frame (24) engaging over the bolt (14) of the catch (12) and in that the locking frame (24) has two locking pins (25, 26) which in the locking position engage in bores (27, 28) which pass through the sensor mass (18) into a housing (29) of the locking device (11).

## Revendications

1. Siège de véhicule automobile comprenant un dossier qui peut pivoter vers l'avant, en particulier banquette arrière à dossier divisé, dans lequel un dispositif de verrouillage avec un verrou qui lie le dossier de siège à un élément voisin dans la position de verrouillage est prévu dans le voisinage de l'extrémité supérieure du dossier, un actionneur (16) étant prévu pour déplacer le verrou (12) de sa position déverrouillée à sa position de verrouillage et un capteur de décélération (17) qui réagit à une décélération importante du véhicule étant prévu pour activer l'actionneur (16), lequel capteur de décélération est disposé sur la tôle de plancher (9), dans le voisinage de l'axe de pivotement (8) du dossier (6, 7) ou de la structure du véhicule (1).

2. Siège de véhicule selon la revendication 1, caractérisé par le fait que l'élément voisin du dossier de siège (6) portant le dispositif de verrouillage (11) est un dossier de siège (7) supplémentaire et que celui-ci comporte un évidement d'encliquetage (13) dans lequel pénètre le verrou (12).

3. Siège de véhicule selon la revendication 1 ou 2, caractérisé par le fait que l'actionneur (16) est un accumulateur à ressort qui est maintenu à l'état tendu par un mécanisme de retenue (20), dans la position déverrouillée, et peut être déclenché par le capteur de décélération (7).

4. Siège de véhicule selon au moins une des revendications précédentes, caractérisé par le fait que le capteur de décélération (17) est une masse (18) qui, en cas de décélération importante du véhicule. se déplace vers une position de déclenchement activant l'actionneur (16).

5. Siège de véhicule selon au moins une des revendications précédentes, caractérisé par le fait que le dispositif de verrouillage (11) comporte une tête de palpage (21) qui est tournée vers le dossier de siège voisin (7) et par le fait que laite tête de palpage (21) est reliée à des moyens de blocage du mécanisme de retenue (20) de l'actionneur (16).

6. Siège de véhicule selon au moins une des revendications précédentes, caractérisé par le fait que le verrou (12) est réalisé sous la forme d'une tige (14) qui est précontrainte dans la direction de verrouillage par un ressort de compression (15).

7. Siège de véhicule selon au moins une des revendications précédentes, caractérisé par le fait que la masse de capteur (18) est disposée à distance dans l'espace du dispositif de verrouillage (11) et est reliée au verrou (12) ou au mécanisme de retenue (20) du verrou (12) par un câble de traction (37).

8. Siège de véhicule selon au moins une des revendications précédentes, caractérisé par le fait que la masse de capteur (18) est réalisée sius la forme d'un pendule oscillant autour d'un axe horizontal (38) et présente un crochet (39) qui, dans la position déverrouillée du verrou (12), est en prise avec une tête (40) de l'extrémité voisine du câble de traction (37).

9. Siège de véhicule selon la revendication 8, caractérisé par le fait que la tête de palpage (21) est couplée à un levier d'encliquetage (41) qui empêche un mouvement de balancement de la masse de capteur (18) dans la position d'arrêt.

10. Siège de véhicule selon au moins une des revendications précédentes, caractérisé par le fait que la masse de capteur (18) est montée de manière à pouvoir coulisser à l'encontre de la force d'un ressort de réglage (42) en cas de décélération.

11. Siège de véhicule selon une des revendications 1 à 3. caractérisé par le fait que le capteur de décélération (33) est un composant présent dans le véhicule pour déclencher des dispositifs de sécurité, notamment les coussins gonflables.

12. Siège de véhicule selon la revendication 1 ou 2, caractérisé par le fait que l'actionneur est une charge (35) pyrotechnique.

13. Siège de véhicule automobile comprenant un dossier (6,7) qui peut pivoter vers l'avant, en particulier banquette arrière à dossier (6, 7) divisé, dans lequel un dispositif de verrouillage (11) avec un verrou (12) qui lie le dossier de siège à un élément voisin dans la position de verrouillage est prévu dans le voisinage de l'extrémité supérieure du dossier, un actionneur (16) étant prévu pour déplacer le verrou (12) de sa position déverrouillée à sa position de verrouillage et un capteur de décélération (17) avec une masse de capteur (18) qui réagit à une décélération importante du véhicule étant prévu pour activer l'actionneur (16), le dispositif de verrouillage (11) comportant une tête de palpage (21) qui est tournée vers le dossier (7) voisin et ladite tête de palpage (21) étant liée à des moyens de retenue de la masse de capteur (18).

14. Siège de véhicule selon la revendication 13, caractérisé par le fait que la tête de palpage (21) est précontrainte en direction du dossier (7) voisin et est pourvue d'un mécanisme de retenue (25, 26, 27, 28) qui, en position sortie, signale l'absence de dossier voisin (7) et retient la masse de capteur (18) dans un évidement (19) de la tige (14).

15. Siège de véhicule selon la revendication 13 ou 14, caractérisé par le fait que la masse de capteur (18) s'engage par une échancrure (30) dans l'évidement (19) de la tige (14) et qu'un clip élastique (31) est disposé entre l'échancrure (30) et l'évidement (19).

16. Siège de véhicule selon la revendication 13 ou au moins une des revendications précédentes, caractérisé par le fait que la tête de palpage (21) comprend un doigt (23) qui peut coulisser axialement et est lié à un étrier de retenue (24) qui entoure la tige (14) du verrou (12) et que l'étrier de retenue (24) comporte deux doigts de retenue (25, 26) qui, dans la position de retenue, pénètrent dans des trous (27, 28) menant à travers la masse de capteur (18) à un boîtier (29) du dispositif de verrouillage (11).
